# EUROPEAN PATENT APPLICATION

(11) **EP 1 669 553 A2**
(43) Date of publication of application: **14.06.2006**
(21) Application number: 05256958.9
(22) Date of filing: 10.11.2005
(51) Int. Cl.: F01D 25/24, F02K 1/56, F02K 1/76

(54) **Securing thrust reverser cowling.**

(30) Priority: 08.12.2004 GB 0426916
(71) Applicant: ROLLS-ROYCE PLC, London, SW1E 6AT (GB)
(72) Inventor: Watson, Matthew Philip, Derby, DE22 3NR (GB)
(74) Representative: Gunn, Michael Alan

(57) **Abstract**

A thrust reverser structure (12A, 12B) for a gas turbine engine (10), the structure comprising an outer structure (16A, 16B) and an inner structure (24A, 24B), the structure is capable of being secured in a closed position via outer fastening members (20, 22) on the outer structure (16A, 16B), characterised in that the structure is capable of being further secured on the inner structure (24A, 24B) via a securing device (34) having a securing position and first and second release arrangements (52, 58), each release arrangement being operable to release the securing device (34) to a non-securing position.

## Description

This invention relates to securing assemblies. More particularly, but not exclusively, the invention relates to securing assemblies for use in securing inner regions of thrust reverser structures of gas turbine engines.

The thrust reverser structures of a gas turbine engine are hinged at the pylon. When the thrust reverser structures are closed, latches secure the outer J blades to one another, thereby holding the outer J blades in the outer V grooves. The thrust reverser structures also include inner J blades and inner V grooves but the inner J blades are not secured to one another. There is thus a danger that the inner J blades may become dislodged from the inner V grooves.

According to one aspect of this invention, there is provided a thrust reverser structure for a gas turbine engine, the structure comprising an outer structure and an inner structure, the structure is capable of being secured in a closed position via outer fastening members on the outer structure, characterised in that the structure is capable of being further secured on the inner structure via a securing device having a securing position and first and second release arrangements, each release arrangement being operable to release the securing device to a non-securing position.

Preferably, the securing device can secure the thrust reverser structure to one another in a closed condition. Each release arrangement is desirably operable to release the securing device and allow the thrust reverser structure to move to an open condition.

Preferably, the first release arrangement is a main release arrangement and may be disposed for convenient use by a user. The second release arrangement may be operated when the first release arrangement is inoperable. The second release arrangement may be a subsidiary release arrangement.

The securing device may comprise a first securing member mountable on a first of the thrust reverser structure. The first securing member may extend from said first thrust reverser structure to a second of the thrust reverser structures when the securing device is in the securing position.

The securing device may comprise a second securing member mountable on a second of the thrust reverser structure. Conveniently, the first and second securing members can co-operate with each other to secure the first securing member to the second securing member.

In a first embodiment, the securing device may comprise a latching arrangement. Desirably, the first securing member comprises a movable latch member mounted on said first thrust reverser structure. Conveniently, the movable latch member is pivotally mounted on said first thrust reverser structure.

In the first embodiment, the second securing member comprises a fixed latch member, mounted on the second thrust reverser structure. Conveniently, the fixed latch member is fixedly mounted on said second thrust reverser structure.

Desirably, the movable latch member is movable between latched and unlatched conditions. Preferably, the movable and fixed latch members comprise co-operating formations, which can co-operate with each other when the movable latch member is in the latched condition to secure the movable latch member to the fixed latch member and thereby secure the first and second thrust reverser structure to each other.

Preferably, resilient urging means is provided to urge the movable latch member to the latched condition. The resilient urging means may comprise a spring.

Preferably, the co-operating formations comprise hook formations. The hook formation can desirably hook onto one another when the securing device is in the securing position.

Preferably, the movable latch member extends from the first thrust reverser structure to the second thrust reverser structure to co-operate with the fixed latch member when the securing device is in the securing position.

The first release arrangement may comprise a flexible member, such as a cable. The flexible member may be attached to the movable latch member to move the movable latch member from the latched to the unlatched condition, when a force is applied to the flexible member, for example by pulling the flexible member conveniently the flexible member can extend to a region external of the first and second thrust reverser structure for ease of use.

Preferably resilient urging means is provided on the movable latch member to urge the movable latch member to the latched condition.

A release formation may be provided on the movable latch member. The release formation may interact with the first and second release arrangements. The release formation may extend from the movable latch member and may comprise a lever. The first release arrangement may be secured to the release formation. The second release arrangement may include an opening member to engage the release formation.

In the second embodiment, the securing device may comprise a detent arrangement. Desirably, the first securing member comprises a fixed detent member mounted on said first thrust reverser structure. Conveniently, the fixed detent member is fixedly mounted relative to said first thrust reverser structure.

In the second embodiment, the second securing member comprises a movable detent member movably mounted relative to said second thrust reverser structure. Conveniently, the movably detent member is movable in a direction transverse to the second thrust reverser structure. Preferably, the movable detent member is pivotally mounted on the second thrust reverser structure. The movable detent member may be movable between an extended condition and a retracted condition. Preferably, when the second detent member is in the extended condition, the first and second detent members can co-operate with each other to secure the fixed and movable detent members to each other. Preferably, when the movable detent member is in the retracted condition, the fixed and movable detent members can be released from each other.

Resilient urging means, for example a spring, may be provided to urge the movable detent member to the extended condition.

The fixed detent member may comprise an engagement surface to engage the movable detent member when the fixed and movable detent members are in the securing position. The engagement surface may be provided by an aperture or recess in the fixed detent member.

The second release arrangement may comprise a flexible member, such as a cable. The flexible member may be attached to the movable detent member to move the movable detent member from the extended to the retracted condition when a force is applied to the flexible member, for example by pulling the flexible member.

Conveniently, the flexible member can extend to a region external of the first and second thrust reverser structures for ease of use.

A release member may be provided on the fixed detent member for engagement with an opening member. The release member on the fixed detent member may comprise a pivoting member pivotally mounted on the fixed detent member.

The pivoting member may be a T-shaped member. Preferably a first arm portion of the T-shaped member may be attached to the flexible member. A second arm portion of the T-shaped member may engage the movable detent member, whereby applying an appropriate force to the first arm causes the T-shaped member to pivot to move the second arm into engagement with the movable detent member to move the movable detent member to the retracted position.

The T-shaped member may include a leg portion extending transverse to the first and second arm portions. The second release arrangement may comprise an opening member to engage the release formation to cause the release formation to move the movable detent member to the retracted condition.

The opening member may comprise a force applying arrangement to apply a force to the release formation. The opening member may comprise a substantially rigid member to pull or push said release formation. The opening member may be elongate.

In one embodiment, the opening member may comprise a bolt which may be receivable in a release aperture in one of the first and second thrust reverser structures. Desirably, when the opening member is received in the release aperture, the opening member engages the release formation to release the securing device to the non-secured position.

The release aperture and the opening member may be threaded, whereby the opening member can threadably engage the threads in the opening and on screwing the opening member into the aperture, the opening member can engage the release formation to release the securing device to the non-secured position.

Alternatively, the opening member may comprise a pneumatic or hydraulic ram which, when operated, can engage the release formation to release the securing device to the non-secured position.

In another alternative, the release formation may define an aperture for receiving on end portion of the opening member. The opening member may comprise an elongate shank and an enlarged end portion. The aperture in the release member may have a first region to receive the enlarged end portion and a second narrow region into which the shank can be slid, wherein the opening member can pull the release formation to move the movable latch member to the unlatched condition.

In another embodiment the opening member may comprise a rod insertable through a hatch in the first or second thrust reverser structure to push the release formation and move the movable latch member to the unlatched condition.

In another embodiment, the opening member may comprise a cam member, which may be attached to a further flexible member. The cam member may be of a conical or frustoconical configuration. The cam member may be arranged to move transverse to the direction of motion of the movable latch member. When the cam member is moved, the cam member may slide across the release formation to move the release formation in the direction transverse to the direction of movement of the cam member.

Another alternative of the opening member comprises a hinge pin extending through the pivot, of the movable latch member wherein removal of the hinge pin releases the movable latch member from its latched condition.

Embodiments of the invention will now be described by way of example only, with reference to the accompanying drawings, in which:
Fig 1 is a rear perspective end view of a gas turbine engine;
Fig 2 is a diagrammatic end view of a first version of a first embodiment of a securing device;
Fig 3 is a diagrammatic end view of a second version of a first embodiment of a securing device;
Fig 3A is a view in the direction of the arrow III in Fig 3;
Fig 4 is a diagrammatic end view of a third version of a first embodiment of a securing device;
Fig 5 is a diagrammatic end view of a fourth version of a first embodiment of a securing device;
Fig 6 is a diagrammatic view along the lines VI-VI in Fig 5;
Fig 7 is a diagrammatic perspective view of a fifth version of a first embodiment of a securing device;
Fig 8 is a perspective view of a second embodiment of a securing device;
Fig 9 is an end view of the securing device shown in Fig 7, showing the securing device in a securing position;
Fig 10 is a view similar to Fig 8 showing a first release arrangement releasing the securing device to a non-securing position; and
Fig 11 is a view similar to Fig 9 showing the first release arrangement inoperative, and a second release arrangement releasing the securing device to a non-securing position.

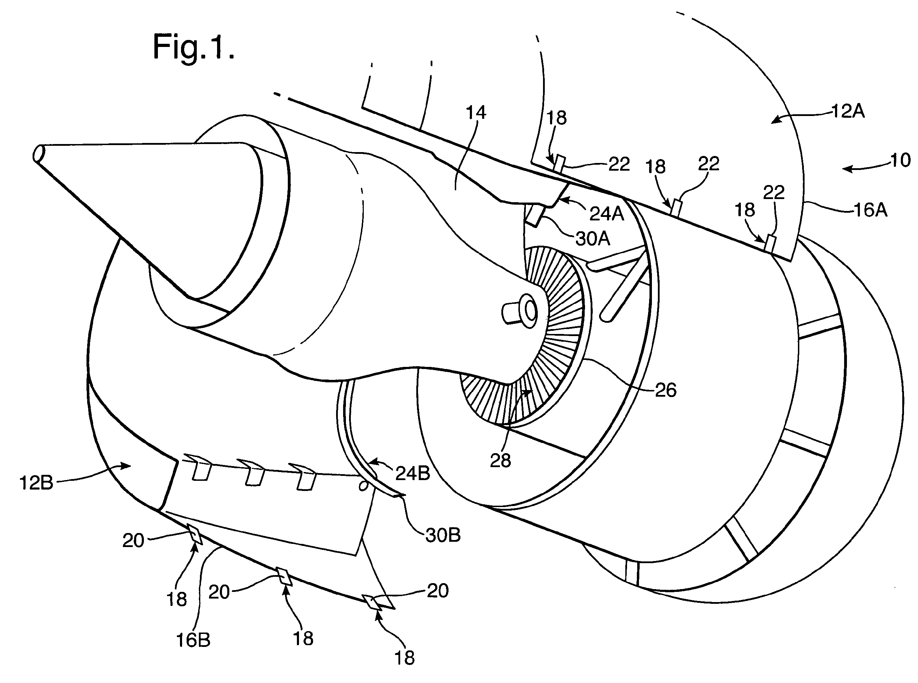

Fig 1 shows a perspective rear view of a gas turbine engine 10 in comprising a pair of thrust reverse structures 12A, 12B, hingedly mounted to the pylon 14. The engine 10 is mounted on the aircraft at a pylon 14.

The thrust reverser structures 12A, 12B each comprise thrust reverser doors (not shown) which act to direct the air flow from the engine fan forwardly, for example to decelerate the aircraft when landing.

In Fig 1 the thrust reverser structures 12A, 12B are shown in an open condition, such as when maintenance is taking place on the engine.

Each of the thrust reverser structures 12A, 12B comprises an outer C-shaped structure 16A, 16B, which are secured together in a closed condition by manually operable outer fastening means. In the embodiment shown, the outer fastening means are in the form of latches 18, each comprising respective first and second fastening members 20, 22. This arrangement would be immediately appreciated and understood by those skilled in the art and so further description is not necessary.

Each of the thrust reverser structures 12A, 12B also includes an inner C-shaped structure 24A, 24B. A holding formation in the form of an annular groove 26 extends around the core 28 of the engine 10. A J-shaped elongate curved member 30A, 30B extends around each of the inner C-shaped structures 24A, 24B and engages in the annular groove 26, when the thrust reverser structures 12A, 12B are in their closed condition.

Securing devices (not shown in Fig 1) are provided on the inner J-shaped C members 30A, 30B to secure the inner C-shaped structures 24A, 24B in their closed conditions.

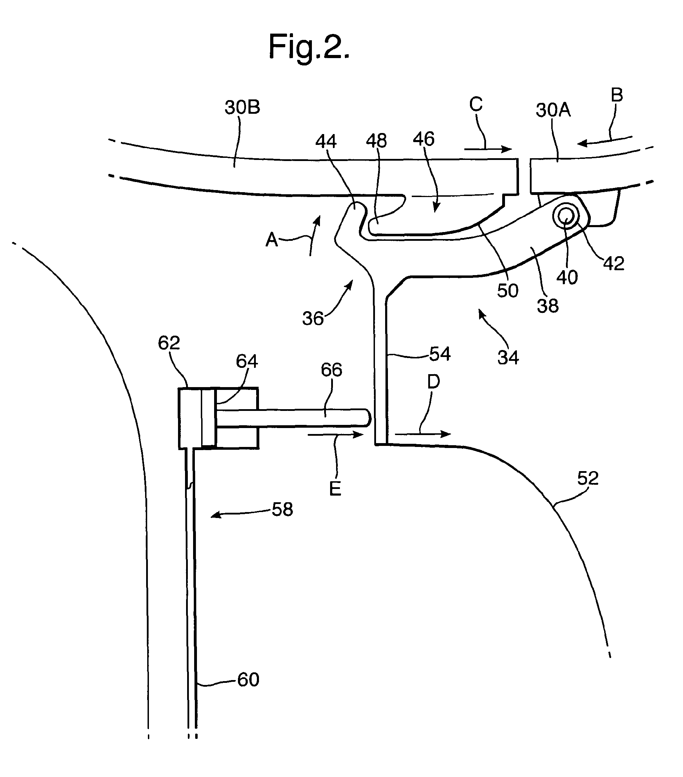

Fig 2 shows a close up diagrammatic view of the ends of the J-shaped curved members 30A, 30B showing a securing device 34 for securing the J-shaped members together.

The securing device 34, shown in Fig 2, is in the form of a latching arrangement 36, comprising a movable latch member 38 pivotally attached to the first J-shaped member 30A by a pivot pin 40. Resilient urging means in the form of a spring 42 is provided around the pin 40 to urge the movable latch member 38 to a latched condition (as shown) in the direction of the arrow A. The movable latch member 38 includes a hook formation 44 at its free end, the purpose of which is described below.

A fixed latch member 46 is fixedly mounted on the second J-shaped member 30B as shown. The fixed latch member 46 includes a hook formation 48 arranged in a position to co-operate with the hook formation 44 on the movable latch member 44 and prevent opening of the J-shaped members 30A, 30B.

The fixed latch member 46 also includes a cam surface 50 which is initially engaged by the hook formation on the movable latch member 38 when the first and second J-shaped members are brought together in the directions indicated by the arrows B and C. The hook formation 44 on the movable latch member 38 rides over the cam surface 50 and in so doing pivots outwardly in the direction opposite to the arrow A. When the first and second J-shaped members are fully closed and the hook formation 44 on the movable latch member has passed over the hook formation 48 the spring 42 moves the movable latch member 38 in the direction of the arrow A to the latched condition, shown in Fig 2.

In order to release the movable latch member 38 from the fixed latch member 46 and allow the J-shaped members to open a first release arrangement in the form of a cable 52, which can extend across suitable cable guides (not shown) and housings (not shown). The cable 52 is attached to a free end 56 of a release member 54, which, in turn, is attached to the movable latch member 38 at a region adjacent the hook formation 44. By applying a force to the free end region 56 of the release member 54 in the direction indicated by the arrow D the hook formation 44 of the movable latch member 38 is disengaged from the hook formation 48 of the fixed latch member 46. This force can be applied by pulling the cable D.

A second release arrangement 58 is provided in case the cable 52 is inoperative, for example if it breaks. The second release arrangement 58 comprises a pneumatic or hydraulic ram arrangement comprising a feed line 60 for feeding a pneumatic or hydraulic fluid to a cylinder 62 in which a piston 64 is mounted. A rod 66 extends from the piston towards the free end region 56 of the release member 54. Thus, by supplying pneumatic or hydraulic fluid to the cylinder 62, the piston 64 and the rod 66 are moved in the direction of the arrow E to push the free end region 56 in the direction of the arrow D. This disengages the hook formation 44 of the movable latch member 38 from the hook formation 48 of the fixed latch member 46 to move the movable latch member 38 to an unlatched condition and allow the J-shaped members 30A, 30B to open.

Thus, in the event that the cable 52 snaps or is otherwise inoperable, the second release arrangement 58 can be used to open the latch arrangement 36.

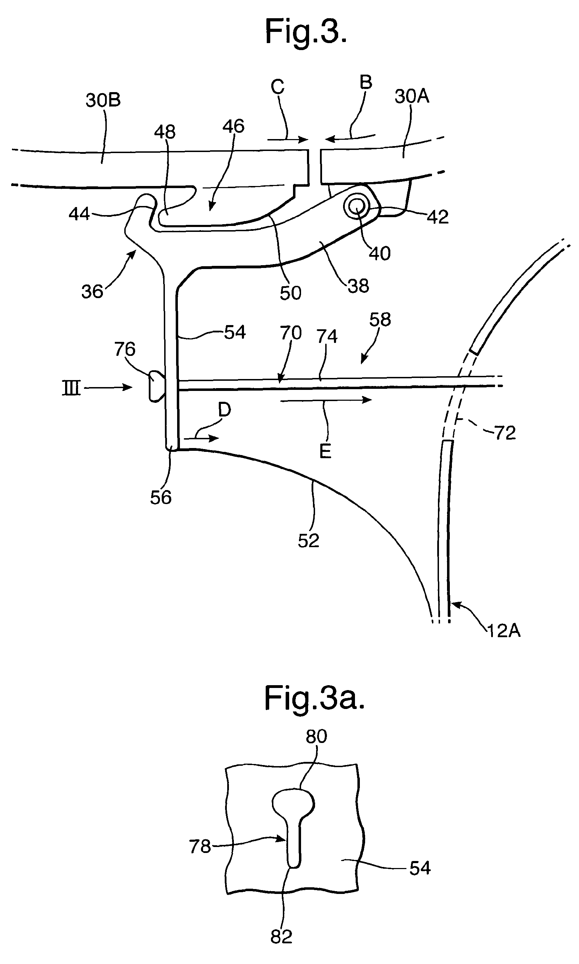

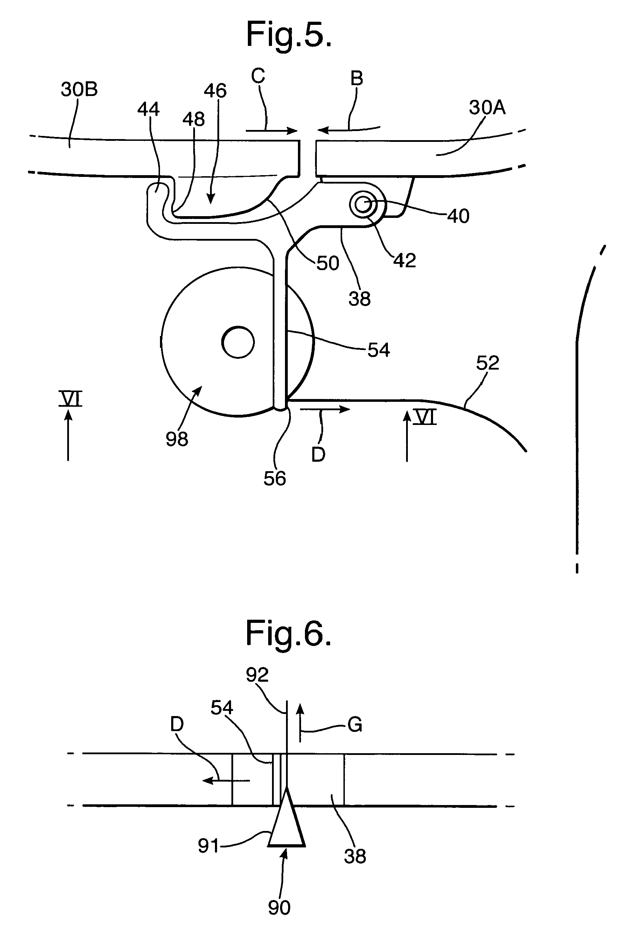

Referring to Figs 3, 6 there is shown a further version of the embodiment shown in Fig 2. Figs 3 to 6 shows a latch arrangement 36 having many of the same features as the latch arrangement 36 shown in Fig 2 and these have been designated with the same reference numerals.

The latch arrangement shown in Fig 3 differs from the latch arrangement shown in Fig 2 in that the second release arrangement 58 comprises a pull rod 70 insertable through an aperture 72 in the form of a hatch in the casing of the thrust reverser structure 12A. The pull rod 70 comprises an elongate shank 74 having an enlarged end portion 76.

Fig 3A shows a view in the direction of the arrow III in Fig 3 of the release member 54, which defines an aperture 78. The aperture 78 has an enlarged region 80 through which the enlarged end 76 of the pull rod 70 can be inserted, and a narrow region 82.

When the enlarged end 76 has been inserted through the enlarged region 80 of the aperture 78, the pull rod 70 can be moved downwardly so that the shank is disposed within the narrow region 82 of the aperture 78. In this position, by pulling on the pull rod 70 in the direction of the arrow E, the enlarged end 76 engages the release member 54, which is then pulled in the direction of the arrow D, to move the movable latch member 38 to its unlatched condition.

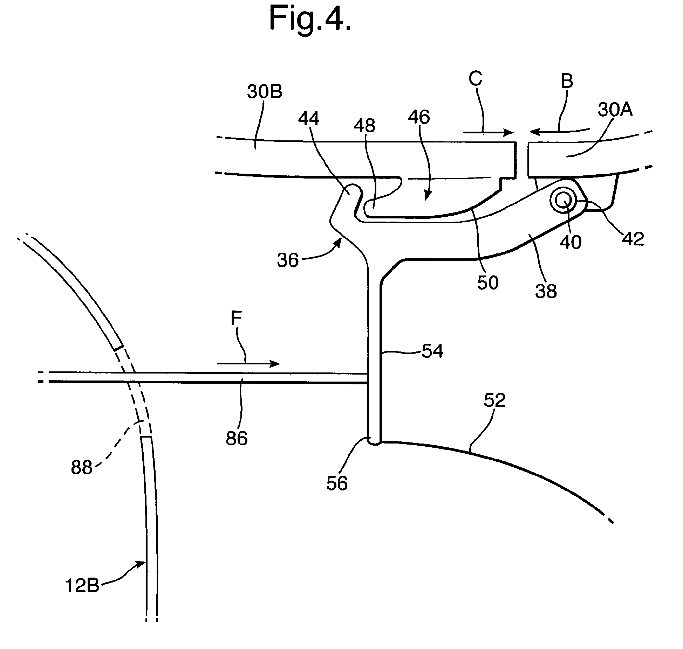

In Fig 4, the second release arrangement comprises a push rod 86 which is insertable in the direction indicated by the arrow F through an aperture 88 in the form of a hatch in the casing of the thrust reverser structure 12B. When the push rod 86 engages the free end region 56 of the release member 54, continued pushing in the direction of the arrow F moves the movable latch member 38 to its unlatched condition.

In Figs 5 and 6, the second release arrangement comprises a conical or frustoconical cam member 90 attached to a cable 92.

The cam member 90 has a cam surface 91 to engage the release member 54. The cable 92 extends substantially at right angles to the cable 52. By pulling the cable 92 in the direction indicated by the arrow G, the cam member 90 is also moved in the same direction. The cam surface 91 slides over the release formation 54 moving it in the direction of the arrow D thereby moving the movable latch member to the unlatched condition.

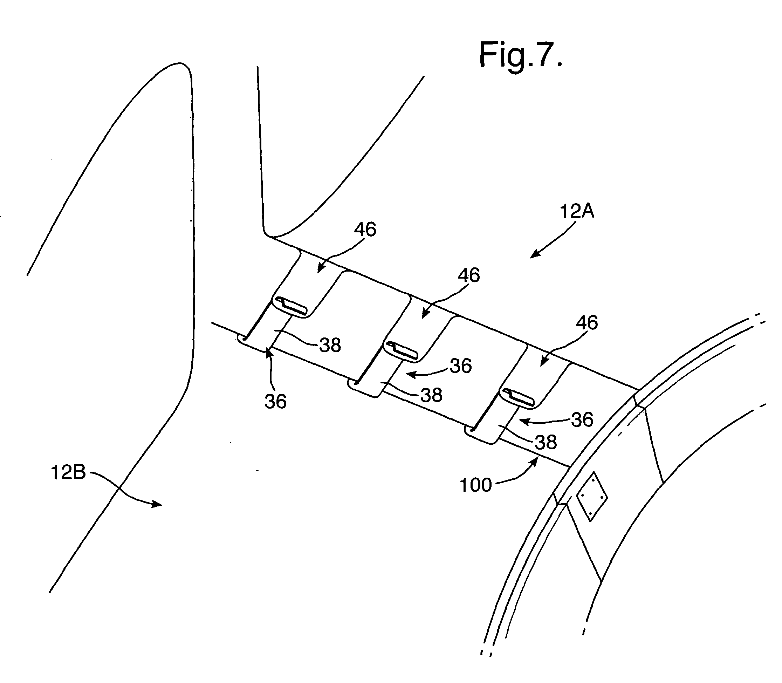

In Fig 7, three latching arrangements 36 are shown diagrammatically. Each of the movable latch members 38 is pivotally mounted by a single hinge pin 100. By removing the hinge pin 100, for example by sliding it out, the movable latch members are no longer attached to the thrust reverser structure 12B, which is thus no longer attached by the latching arrangements 36 to the other thrust reverser structure 12A.

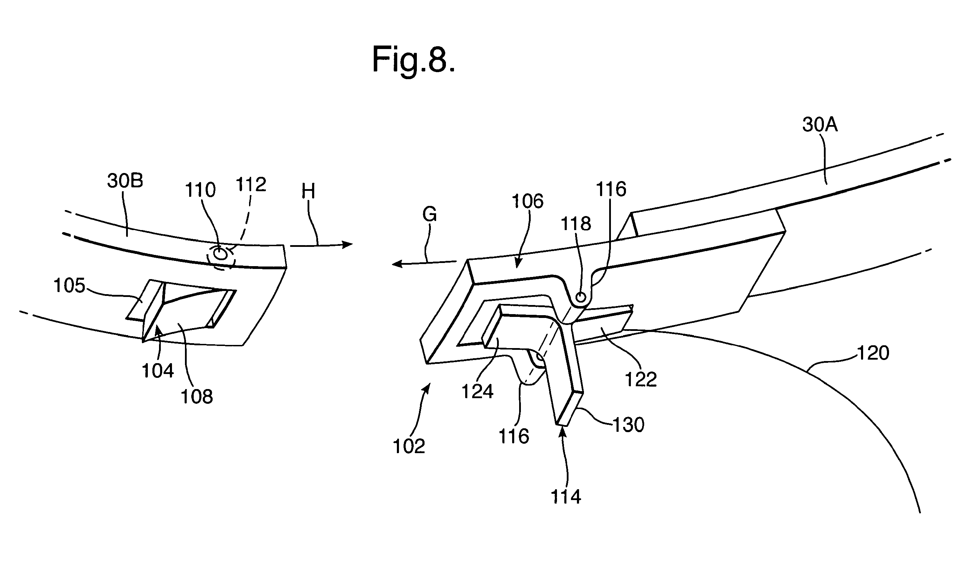

Referring to Figs 8 to 11 there is shown a second embodiment comprising a detent arrangement 102 comprising a movable detent member 104 mounted on the second J-shaped member 30B, and a fixed detent member 106 mounted on the first J-shaped member 30A.

The movable detent member 104 has a cam surface 108 and is pivotally mounted in an aperture 105 of the second J-shaped member 30B by a pivot pin 110. The movable detent member 104 is pivotally movable about the pivot pin 110 between an extended condition as shown in Fig 8 and a retracted condition, in which the movable detent member 104 lies within the aperture 105.

Resilient urging means in the form of a spring 112 (shown in broken lines in Fig 8) urges the movable detent member 104 to the extended condition.

The fixed detent member 106 extends from the first J-shaped member 30A to engage the movable detent member 104. The two ends of the first and second J-shaped members 30A, 30B and the fixed and movable detent members 104, 106 are brought together by being moved in the respective directions indicated by the arrows G and H. As the fixed detent member 106 engages the cam surface 108 of the movable detent member 104, the movable detent member 104 pivots about the pivot pin 110 to its retracted position lying flush with the second J-shaped member.

The fixed detent member 106 defines an aperture 107 to receive the movable detent member 104, when the movable detent member 104 is in its extended condition.

The fixed detent member 106 slides over the retracted movable detent member 104, until the first and second J-shaped members are fully closed. In this position, the spring 112 moves the movable detent member 104 to its extended condition in the aperture 107 of the fixed detent member 106, thus securing the fixed detent member 106 to the movable detent member 104.

The fixed detent member 106 carries a relapse member 114 in the form of a pivotally mounted T-shaped member. The T-shaped member 114 is pivotally attached to lugs 116 on the fixed detent member 106 by a pivot member 118 at the junction of the arms of the T-shaped member.

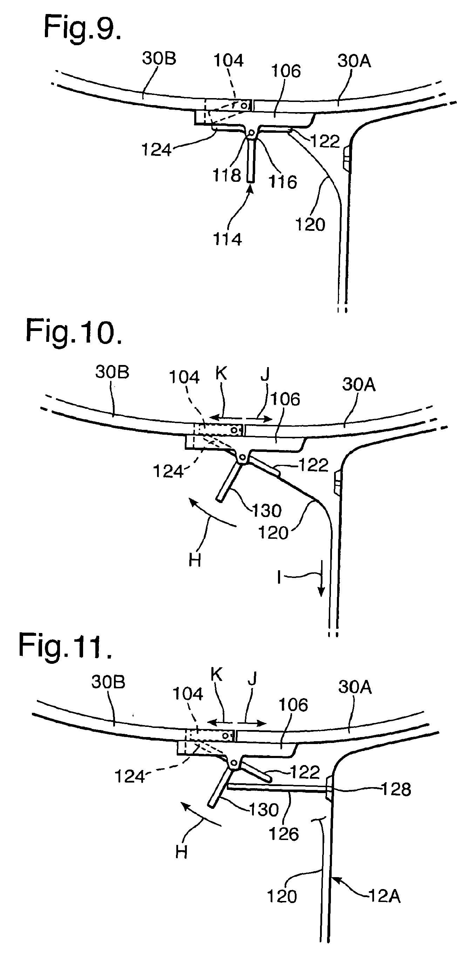

A first release arrangement comprising a cable 120 extends from a first arm 122 of the T-shaped member 114. A second arm 124, opposite the first arm 122 is arranged over the aperture 107 in the fixed detent member 106 (see Fig 9). When a force is applied to the cable 120 in the direction of the arrow I (see Fig 10), the T-shaped member 114 is pivoted about the pivot member 118, in the direction of the arrow H, so that the second arm 122 pushes the movable detent member to its retracted condition thereby releasing the first and second J-shaped members 30A, 30B so that they can move in the directions indicated by the arrows J and K.

In the event that the cable 120 breaks, an elongate threaded screwer 126 can be threadably received in a threaded aperture 128 in the casing of the thrust reversal structure 12A. As the screw 126 is screwed into the aperture 128, it engages a third arm 130 of the T-shaped member 114. The third arm 130 is connected to the first and second arms 122, 124 at their junction with each other.

The pushing of the screw 126 against the third arm 130 causes the T-shaped member 114 to pivot about the pivot member 118 in the direction of the arrow H in Fig 11 so that the second arm 124 pushes the movable detent member 104 to its retracted condition so that the fixed detent member 106 can release itself from the movable detent member 104 and the two J-shaped members can move apart as indicated by the arrows K and J.

Although this description of the preferred embodiments has described only a single securing device on each of the inner C-shaped structures 24A, 24B, it will be appreciated that any suitable number of securing devices can be provided, which can be spaced from each other across the inner C-shaped members 24A, 24B.

Various modifications can be made without departing from the scope of the invention.

## Claims

1. A thrust reverser structure (12A, 12B) for a gas turbine engine (10), the structure comprising an outer structure (16A, 16B) and an inner structure (24A, 24B), the structure is capable of being secured in a closed position via outer fastening members (20, 22) on the outer structure (16A, 16B), **characterised in that** the structure is capable of being further secured on the inner structure (24A, 24B) via a securing device (34) having a securing position and first and second release arrangements (52, 58), each release arrangement being operable to release the securing device (34) to a non-securing position.

2. A thrust reverser structure (12A, 12B) according to claim 1 **characterised in that** the securing device (34) can secure the thrust reverser structures to one another in a closed condition, and each release arrangement (52, 58) is desirably operable to release the securing device (34) and allow the thrust reverser structures to move to an open condition.

3. A thrust reverser structure (12A, 12B) according to claim 1 or 2 **characterised in that** the first release arrangement (52) is a main release arrangement and the second release arrangement (58) can be operated when the first release arrangement (52) is inoperable.

4. A thrust reverser structure (12A, 12B) according to claim 1, 2 or 3 **characterised in that** the securing device (34) comprises a first securing member (38, 106) mountable on a first of the thrust reverser structures (30A), the first securing member (38, 106) extending from said first thrust reverser structure (30A) to a second of the thrust reverser structures (30B) when the securing device (34) is in the securing position.

5. A thrust reverser structure (12A, 12B) according to claim 4 **characterised in that** the securing device (34) comprises a second securing member (46, 104) mountable on a second of the thrust reverser structures (30B), wherein the first and second securing members (46, 104) can co-operate with each other to secure the first securing member (38, 106) to the second securing member (46, 104).

6. A thrust reverser structure (12A, 12B) according to claim 4 or 5 **characterised in that** the securing device (34) comprises a latching arrangement (36), and the first securing member comprises a movable latch member (38) mounted on said first thrust reverser structure (30A), wherein the movable latch member (38) is movable between latched and unlatched conditions.

7. A thrust reverser structure (12A, 12B) according to claim 6 **characterised in that** the movable latch member (38) is pivotally mounted on said first thrust reverser structure (30A).

8. A thrust reverser structure (12A, 12B) to claim 6 or 7 **characterised in that** the second securing member comprises a fixed latch member (46) mounted on the second thrust reverser structure (30B).

9. A thrust reverser structure (12A, 12B) according to claim 8 **characterised in that** the movable and fixed latch members (38, 46) comprise co-operating formations (44, 48), which can co-operate with each other when the movable latch member (38) is in the latched condition to secure the movable latch member (38) to the fixed latch member (46) and thereby secure the first and second thrust reverser structures (30A, 30B) to each other.

10. A thrust reverser structure (12A, 12B) according to claim 9 **characterised in that** the co-operating formations comprise hook formations (44, 48), wherein the hook formations (44, 48) can hook onto one another when the securing device (34) is in the securing position.

11. A thrust reverser structure (12A, 12B) according to any of claims 8 to 10 **characterised in that** the movable latch member (38) extends from the first thrust reverser structure (30A) to the second thrust reverser structure (30B) to co-operate with the fixed latch member (46) when the securing device (34) is in the securing position.

12. A thrust reverser structure (12A, 12B) according to any of claims 6 to 11 **characterised in that** the first release arrangement (52) comprises a flexible member (52) attached to the movable latch member (38) to move the movable latch member from the latched to the unlatched condition, when a force is applied to the flexible member (52).

13. A thrust reverser structure (12A, 12B) according to claim 12 **characterised in that** the flexible member (52) extends to a region external of the first and second thrust reverser structures (30A, 30B) for ease of use.

14. A thrust reverser structure (12A, 12B) according to any of claims 6 to 13 **characterised in that** a release formation (54) is provided on the movable latch member (38), the release formation (54) interacting with the first and second release arrangements (52, 58).

15. A thrust reverser structure (12A, 12B) according to claim 14 **characterised in that** the release formation (54) extends from the movable latch member (38) and comprises a lever.

16. A thrust reverser structure (12A, 12B) according to claim 14 or 15 **characterised in that** the first release arrangement is secured to the release formation (54).

17. A thrust reverser structure (12A, 12B) according to claim 14, 15 or 16 **characterised in that** the second release arrangement (58) includes an opening member to engage the release formation.

18. A thrust reverser structure (12A, 12B) according to any of claims 6 to 17 **characterised in that** resilient urging means (42) is provided on the movable latch member (38) to urge the movable latch member (38) to the latched condition.

19. A thrust reverser structure (12A, 12B) according to any of claims 1 to 5 **characterised in that** the securing device (34) comprises a detent arrangement (102), wherein the first securing member comprises a fixed detent member (106) mounted on said first thrust reverser structure (30A).

20. A thrust reverser structure (12A, 12B) according to claim 19 **characterised in that** the second securing member comprises a movable detent member (104) movably mounted relative to said second thrust reverser structure (30B).

21. A thrust reverser structure (12A, 12B) according to claim 20 **characterised in that** the movable detent member (104) is movable in a direction transverse to the second thrust reverser structure (30B).

22. A thrust reverser structure (12A, 12B) according to claim 20 or 21 **characterised in that** the movable detent member (104) is pivotally mounted on the second thrust reverser structure (30B).

23. A thrust reverser structure (12A, 12B) according to claim 20, 21 or 22 **characterised in that** the movable detent member (104) is movable between an extended condition and a retracted condition, wherein when the movable detent member (104) is in the extended condition, the fixed and movable detent members (106, 104) can co-operate with each other to secure the fixed and movable detent members (106, 104) to each other, and when the movable detent member (104) is in the retracted condition, the fixed and movable detent members (106, 104) can be released from each other.

24. A thrust reverser structure (12A, 12B) according to claim 23 **characterised in that** resilient urging means (112) is provided to urge the movable detent member (104) to the extended condition.

25. A thrust reverser structure (12A, 12B) according to any of claims 22 to 24 **characterised in that** the fixed detent member (106) comprises an engagement surface to engage the movable detent member (104) when the fixed and movable detent members (106, 104) are in the securing position.

26. A thrust reverser structure (12A, 12B) according to claim 27 **characterised in that** the engagement surface is provided by an aperture or recess in the fixed detent member (106).

27. A thrust reverser structure (12A, 12B) according to any of claims 20 to 26 **characterised in that** the second release arrangement comprises a flexible member (120) arranged to move the movable detent member (104) from the extended to the retracted condition when a force is applied to the flexible member (120).

28. A thrust reverser structure (12A, 12B) according to claim 27 **characterised in that** the flexible member (120) can extend to a region external of the first and second thrust reverser structures (30A, 30B) for ease of use.

29. A thrust reverser structure (12A, 12B) according to claim 27 to 28 **characterised in that** a release member (114) is provided on the fixed detent member (106) for engagement with an opening member, said release member comprising a pivoting member pivotally mounted on the fixed detent member (106).

30. A thrust reverser structure (12A, 12B) according to claim 29 when dependent on claim 28 or 29 **characterised in that** the pivoting member comprises a T-shaped member (114), wherein a first arm portion (122) of the T-shaped member (114) is attached to the flexible member (120), and a second arm portion (124) of the T-shaped member (114) engages the movable detent member (104), whereby applying an appropriate force to the first arm portion (122) causes the T-shaped member (114) to pivot to move the second arm portion (124) into engagement with the movable detent member (104) to move the movable detent member (104) to the retracted position.

31. A thrust reverser structure (12A, 12B) according to claim 30 **characterised in that** the T-shaped member (114) includes a release formation comprising a leg portion (130) extending transverse to the first and second arm portions (122, 124), wherein the second release arrangement comprises an opening member (126) to engage the release formation (130) to cause the release formation to move the movable detent member (104) to the retracted condition.

32. A thrust reverser structure (12A, 12B) according to claim 31 **characterised in that** the opening member (126) comprises a force applying arrangement to apply a force to the release formation (130).

33. A thrust reverser structure (12A, 12B) according to claim 32 **characterised in that** the opening member (126) comprises a substantially rigid member to pull or push said release formation (130).

34. A thrust reverser structure (12A, 12B) according to claim 33 **characterised in that** the opening member (126) is elongate.

35. A thrust reverser structure (12A, 12B) according to any of claims 14 to 17 or 31 to 34 **characterised in that** the opening member comprises a bolt (126) receivable in a release aperture (128) in one of the first and second thrust reverser structures, wherein when the opening member is received in the release aperture, the opening member engages the release formation (130) to release the securing device to the non-secured position.

36. A thrust reverser structure (12A, 12B) according to claim 36 **characterised in that** the release aperture (128) and the opening member (126) are threaded, whereby the opening member (126) can threadably engage the threads in the release aperture (128) and on screwing the opening member (126) into the aperture (128), the opening member can engage the release formation (130) to release the securing device to the non-secured position.

37. A thrust reverser structure (12A, 12B) according to any of claims 14 to 17 or 31 to 34 **characterised in that** the opening member comprises a pneumatic or hydraulic ram (66) which, when operated, can engage the release formation (54) to release the securing device (34) to the non-secured position.

38. A thrust reverser structure (12A, 12B) according to any of claims 14 to 17 or 31 to 34 **characterised in that** the release formation (54) defines an aperture (80, 82) for receiving one end portion of the opening member (70), the opening member comprising an elongate shank (74) and an enlarged end portion (76).

39. A thrust reverser structure (12A, 12B) according to claim 38 **characterised in that** the aperture in the release member has a first region (82) to receive the enlarged end portion (76) and a second narrow region (80) in which the shank (74) can be slid, wherein the opening member can pull the release formation (54) to move the movable latch member (38) to the unlatched condition.

40. A thrust reverser structure (12A, 12B) according to any of claims 14 to 17 or 31 to 34 **characterised in that** the opening member comprises a rod (86) insertable through a hatch (88) in the first or second thrust reverser structure to push the release formation (54) and move the movable latch member (38) to the unlatched condition.

41. A thrust reverser structure (12A, 12B) according to any of claims 14 to 17 or 31 to 34 **characterised in that** the opening member comprises a cam member (90) attached to a further flexible member (92), the cam member (90) being arranged to move transverse to the direction of motion of the movable latch member (38), whereby when the cam member (90) is moved, the cam member slides across the release formation (54) to move the release formation in the direction transverse to the direction of movement of the cam member (90).

42. A thrust reverser structure (12A, 12B) according to claim 41 **characterised in that** the cam member (90) is of a conical or frustoconical configuration.

43. A thrust reverser structure (12A, 12B) according to any of claims 14 to 17 or 31 to 34 **characterised in that** the opening member comprises a hinge pin (100) extending through the pivot, of the movable latch member (38) wherein removal of the hinge pin (100) releases the movable latch member from its latched condition.
